# EUROPÄISCHE PATENTANMELDUNG

(11) **EP 2 108 920 A2**
(43) Veröffentlichungstag der Anmeldung: **14.10.2009**
(21) Anmeldenummer: 09001078.6
(22) Anmeldetag: 27.01.2009
(51) Int. Cl.: G01B 11/24, B24B 9/10

(54) **Verfahren zum Erfassen eines Kantenverlaufs einer Kante einer Platte**

(30) Priorität: 09.04.2008 DE 102008022338
(71) Anmelder: Waldemar Knittel Glasbearbeitungs GmbH, 38114 Braunschweig (DE)
(72) Erfinder: Günther, Jochen, 33824 Werther (DE)
(74) Vertreter: Lins, Edgar

(57) **Zusammenfassung**

Die Erfindung betrifft ein Verfahren zum Erfassen eines Kantenverlaufs (k(x,y)) einer Kante (20) einer Platte (18), insbesondere einer Glasplatte (18), mit den Schritten: (a) Bewegen eines Sensors (24), insbesondere eines optischen Sensors (24), eines Sensorkopfs (16) auf einer geschlossenen umlaufenden Bahn relativ zum Sensorkopf (16), (b) Bewegen des Sensorkopfs (16) entlang einer Oberfläche (19) der Platte (18), (c) kontinuierliches Erfassen von Messsignalen des Sensors (24), (d) Ermitteln einer Sensorposition des Sensors (24), an der der Sensor (24) die Kante (20) passiert, und (e) Ermitteln einer Absolut-Sensorposition (x, y) des Sensors (24) relativ zur Platte (18) aus der Sensorposition, so dass der Kantenverlauf (k(x,y)) erhalten wird.

## Beschreibung

Die Erfindung betrifft ein Verfahren zum Erfassen eines Kantenverlaufs einer Kante einer Platte, insbesondere einer Glasplatte. Gemäß einem zweiten Aspekt betrifft die Erfindung eine Vorrichtung zum Erfassen eines Kantenverlaufs einer Platte.

Hintergrund der Erfindung ist, dass Platten, beispielsweise Glasplatten, bei ihrer Verarbeitung zugeschnitten werden. Danach werden die Glasplatten einer Nachbearbeitung zugeführt und können dann, beispielsweise mit an einem an einem x-y-Tisch geführten Werkzeug, poliert, gebohrt oder gesäumt werden. Damit dieser Vorgang automatisiert werden kann, ist es notwendig, dass der Kantenverlauf sicher erfasst wird, um Ausschuss zu vermeiden. Dabei ist der Kantenverlauf, beispielsweise aus organisatorischen Gründen, teilweise nicht sicher bekannt.

Da es sich bei individuell zugeschnittenen Glasplatten nicht um Massenware handelt, werden häufig unterschiedliche Gläser bearbeitet. Beispielsweise müssen mit einer Vorrichtung und einem Verfahren transparente und gefärbte Glasscheiben bearbeitet werden können. Bekannte Verfahren arbeiten mit über dem Zerschneidetisch angeordneten Kameras, die die Glasscheibe erfassen und daraus den Kantenverlauf ermitteln. Es hat sich jedoch gezeigt, dass der Kantenverlauf der Glasplatte nur mit einer geringen Prozesssicherheit erkannt werden kann.

Der Erfindung liegt die Aufgabe zugrunde, einen Kantenverlauf bei Platten, insbesondere bei Glasplatten, mit einer höheren Prozesssicherheit zu erfassen.

Die Erfindung löst das Problem durch ein Verfahren zum Erfassen eines Kantenverlaufs einer Kante einer Platte, insbesondere einer Glasplatte, mit den Schritten: (a) Bewegen eines Sensors, insbesondere eines optischen Sensors, eines Sensorkopfs auf einer geschlossenen umlaufenden Bahn relativ zum Sensorkopf, (b) Bewegen des Sensorkopfs entlang einer Oberfläche der Platte, so dass eine Sensorbahn die Kante passiert, (c) kontinuierliches Erfassen von Messsignalen des Sensors, (d) Ermitteln einer Sensorposition des Sensors, an der der Sensor die Kante passiert, aus den Messsignalen und (e) Ermitteln einer Absolut-Sensorposition des Sensors relativ zur Platte aus der Sensorposition, so dass der Kantenverlauf erhalten wird.

Gemäß einem zweiten Aspekt löst die Erfindung das Problem durch eine Vorrichtung zum Erfassen eines Kantenverlaufs einer Kante einer Platte, mit (a) einem Sensorkopf, der einen relativ zum Sensorkopf auf einer geschlossenen Bahn bewegbaren Sensor umfasst, (b) einer Verfahreinheit zum Bewegen des Sensorkopfs entlang einer Oberfläche der Glasplatte und (c) einer elektrischen Steuerung, die eingerichtet ist zum Durchführen eines erfindungsgemäßen Verfahrens.

Vorteilhaft an der Erfindung ist, dass eine besonders hohe Prozesssicherheit beim Erfassen des Kantenverlaufs einer Platte, insbesondere einer transparenten, ungefärbten Glasplatte, erreichbar ist. Dadurch, dass der optische Sensor auf der geschlossenen umlaufenden Bahn bewegt wird, kann ein Passieren der Kante mit hoher Sicherheit aus Messsignalen des optischen Sensors ermittelt werden. Anhand der die Kantenposition kodierenden Daten kann der Sensorkopf der Kante nachgeführt werden. Aus der Bahn des Sensorkopfs kann dann einfach der Kantenverlauf bestimmt werden, was bei geometrisch einfachen, aber transparenten Glasplatten eine besonders hohe Prozesssicherheit ergibt.

Vorteilhaft ist zudem, dass das Verfahren mit der gleichen Vorrichtung durchgeführt werden kann wie ein sich anschließendes Bearbeitungsverfahren. Beispielsweise ist es möglich, den Sensorkopf an einem Roboter anzuordnen, der gleichzeitig ein Bearbeitungswerkzeug wie eine Säge, einen Laser oder ein Schleifwerkzeug führt.

Dadurch ist eine Kalibrierung hinfällig, die notwendig ist, wenn die Bearbeitung der Platte und das Erfassen des Kantenverlaufs mit unterschiedlichen Vorrichtungen durchgeführt werden.

Im Rahmen der vorliegenden Beschreibung wird unter einem Sensor insbesondere ein optischer Sensor verstanden. Denkbar sind jedoch auch taktile Sensoren oder Ultraschallsensoren. Unter einem optischen Sensor wird insbesondere jeder Sensor verstanden, der es unter Verwendung elektromagnetischer Strahlen, insbesondere von Licht, erlaubt, Aussagen über den Kantenverlauf zu erhalten.

Der optische Sensor kann ein aktiver oder ein passiver oder ein passiver optischer Sensor sein. Unter einem aktiven optischen Sensor wird eine Vorrichtung verstanden, die Strahlung aussendet, beispielsweise modulierte Infrarotstrahlung, und die gleichzeitig ein Sensorelement umfasst, mit dem reflektierte und/oder transmittierte Strahlung detektiert wird. Unter einem passiven Sensor wird ein Sensor verstanden, der ein Sensorelement umfasst, das von der Platte ausgehende Strahlung detektiert. Besteht beispielsweise ein Temperaturunterschied zwischen der Platte und der Umgebung, so kann mit dem optischen Sensor Infrarot-Strahlung erfasst werden.

Unter einem Kantenverlauf wird insbesondere eine Kurve im mathematischen Sinne verstanden, die den physikalischen Rand der Platte beschreibt. Insbesondere ist der Kantenverlauf eine zweidimensionale Kurve, d.h. dass alle Punkte der Kurve in einer Ebene liegen. Unter einer Kante der Platte wird insbesondere derjenige physikalische Bereich der Platte verstanden, der die beiden Oberflächen der Platte miteinander verbindet. Die Platte hat also genau eine Kante. Im engeren Sinne ist die Kante ein zweidimensionales Objekt. Bei Platten, deren Dicke klein ist gegenüber ihrer Flächenausdehnung, ist die Projektion der Kante auf eine der beiden Flächen der Kantenverlauf.

Es ist möglich, dass die Position des Sensors beständig, beispielsweise durch Laser-Triangulation, in absoluten Koordinaten gemessen wird. Absolute Koordinaten können beispielsweise relativ zu einem Maschinen-Koordinatensystem oder einem Platten-Koordinatensystem gemessen werden.

Bevorzugt ist ein Verfahren mit den Schritten (a) Bewegen eines Sensors eines Sensorkopfs auf einer geschlossenen umlaufenden Bahn relativ zum Sensorkopf, (b) Bewegen des Sensorkopfs entlang einer Oberfläche der Platte, (c) kontinuierliches Erfassen von Messsignalen des Sensors, (d) Ermitteln einer Relativ-Sensorposition des Sensors relativ zum Sensorkopf, an der der Sensor die Kante passiert, und (e) Ermitteln einer Absolut-Sensorposition des Sensors relativ zur Glasplatte aus der Relativ-Sensorposition, so dass der Kantenverlauf erhalten wird. Dieses Verfahren ist besonders einfach durchführbar.

Unter einen Ermitteln der Absolut-Sensorposition des Sensors relativ zur Glasplatte aus der der Relativ-Sensorposition, wird insbesondere verstanden, dass eine Sensorkopfposition des Sensorkopfs in einem Maschinen-Koordinatensystem erfasst wird, in dem auch die Position der Platte bestimmt werden soll. Liegt beispielsweise eine Glasplatte auf einem Zuschneidetisch, so bezieht sich das Maschinen-Koordinatensystem auf diesen Zuschneidetisch. Die Absolut-Sensorposition ist dann die in Maschinen-Koordinaten gemessene. Wenn es sich bei der geschlossenen umlaufenden Bahn um eine Kreisbahn handelt, so ist der Mittelpunkt dieser Kreisbahn bekannt. Aus dem Drehwinkel, den der optische Sensor relativ zum Sensorkopf einnimmt und der die Relativ-Sensorposition darstellt, und aus dem Abstand des optischen Sensors zum Mittelpunkt und der Lage des Mittelpunktes in Maschinen-Koordinaten, kann dann durch Vektoraddition die Position des optischen Sensors im Maschinen-Koordinatensystem bestimmt werden.

In einer bevorzugten Ausführungsform umfasst das erfindungsgemäße Verfahren die Schritte eines Vergleichens des ermittelten Kantenverlaufs der Platte mit in einer Datenbank abgelegten Kantenverläufen einer Vielzahl von Platten, Auslesen einer Bearbeitungsinformation der Platte, Übermitteln der Bearbeitungsinformation an eine Werkzeugmaschine bzw. einen Roboter und Bearbeiten der Platte mittels der Werkzeugmaschine bzw. des Roboters anhand der übermittelten Bearbeitungsinformationen.

In einem Produktionsablauf ist es oftmals bekannt, dass eine bestimmte Anzahl von Platten, beispielsweise Glasplatten, auf eine vorgegebene Art und Weise bearbeitet werden muss. Es kann jedoch unbekannt sein, welche der Platten momentan auf dem Zuschneidetisch liegt. Mit dem erfindungsgemäßen Verfahren kann dann vorteilhafterweise mit einer sehr hohen Genauigkeit bestimmt werden, um welche Platte es sich handelt. Es ist dann möglich, die bekannte Geometrie der Platte so mit dem gemessenen Kantenverlauf abzugleichen. Dazu wird der in der Datenbank abgelegte Kantenverlauf so an die Messdaten angepasst, dass sich eine minimale Abweichung ergibt, beispielsweise durch Minimieren des Quadratfehlers.

In einer bevorzugten Ausführungsform wird der Sensorkopf im Wesentlichen parallel zur Oberfläche der Glasplatte bewegt. Das kann beispielsweise dadurch erreicht werden, dass der Sensorkopf an einem x-y-Tisch angeordnet ist, so dass die Glasplatte mit dem Sensorkopf abgerastert werden kann. Da bestimmte Eigenschaften des Kantenverlaufs bekannt sind, beispielsweise dass der Kantenverlauf eine geschlossene Kurve bilden muss, kann durch das Abrastern der Glasplatte mit hoher Sicherheit der Kantenverlauf ermittelt werden. Sofern ein Kantenverlauf ermittelt wird, der vorgegebenen Randbedingungen nicht entspricht, wird bevorzugt ein Signal ausgegeben, so dass ein Bediener das System auf eine Fehlfunktion untersuchen kann.

Besonders bevorzugt wird der Sensorkopf in der Arbeitsebene entlang der Kante bewegt. Unter einem Bewegen entlang der Kante wird insbesondere ein Bewegen in unmittelbarer Nähe der Kante verstanden. Beispielsweise ist der Abstand kleiner als 20 cm. Dadurch, dass lediglich die Kante mit dem Sensorkopf abgefahren werden muss, ergibt sich ein besonders schnelles Verfahren. Ein weiterer Vorteil ist, dass das Verfahren auch ohne x-y-Tisch durchgeführt werden kann. Beispielsweise kann der Sensorkopf an einem Roboter befestigt sein, der an der Kante entlangfährt.

Besonders bevorzugt wird der Sensorkopf so entlang der Kante bewegt, dass die Relativ-Sensorposition konstant bleibt. In anderen Worten wird der Sensorkopf so positioniert, dass die Relativ-Sensorposition nur um einen vorgegebenen kleinen Wert von einer Soll-Sensorposition abweicht. Vorteilhaft hieran ist, dass der Sensorkopf so stets der Kante folgt. Sollte an einer Stelle der Kante die Ermittlung der Kante besonders schwierig sein, so kann vorgesehen sein, dass der Sensorkopf erst dann weiterbewegt wird, wenn die Position sicher bestimmt ist.

Bevorzugt ist die geschlossene umlaufende Bahn eine Kreisbahn, wobei die Relativ-Sensorposition eine Winkelposition ist, die mittels eines Winkelsensors ermittelt wird. Die Relativ-Sensorposition gibt die Lage des Sensors relativ zum Sensorkopf an. Bei einer Kreisbahn ist der Abstand des Sensors vom Kreismittelpunkt konstant, so dass die Relativ-Sensorposition einfach, schnell und mit hoher Präzision durch Messen eines Kantenwinkels ermittelt werden kann. Der Kantenwinkel ist derjenige Drehwinkel, an dem der Sensor die Kante erfasst.

In diesem Fall kann beispielsweise ein Winkelwert als Soll-Kantenwinkel festgelegt werden. Der Sensorkopf wird dann stets so geführt, dass der ermittelte Kantenwinkel dem Soll-Kantenwinkel entspricht. Wird der Sensorkopf beispielsweise entlang einer geraden Kante geführt, so entspricht der ermittelte Kantenwinkel stets dem Soll-Kantenwinkel von beispielsweise 0°. Ändert die Kante nun ihren Verlauf, so führt das zu einem geänderten Kantenwinkel. In diesem Fall hält der Sensorkopf an und wird so nachgestellt, dass der Kantenwinkel wieder beim Soll-Kantenwinkel von 0° gemessen wird. Der resultierende Pfad des Sensorkopf wird erfasst und daraus anschließend der Kantenverlauf berechnet.

Es kann der Fall eintreten, dass der Kantenverlauf dergestalt ist, dass der Sensor bei einem vollständigen Umlauf die Kante nicht schneidet, sondern lediglich tangiert. Um auch in diesem Fall eindeutige und leicht auswertbare Messergebnisse zu erhalten, ist gemäß einer bevorzugten Ausführungsform vorgesehen, dass ein Kreissegment der Kreisbahn als Mess-Kreissegment gesetzt wird, wobei beim Ermitteln der Relativ-Sensorposition nur diejenigen Sensor-Positionen betrachtet werden, die in dem vorgegebenen Kreissegment liegen. Beispielsweise ist das Kreissegment ein Quadrant des Kreises.

Dabei wird bevorzugt ermittelt, ob die Relativ-Sensorposition in einem Randintervall des vorliegenden Kreissegments liegt, wobei bejahendenfalls der Sensorkopf so bewegt wird, dass die Relativ-Sensorposition in einem anderen Kreissegment liegt, und wobei das andere Kreissegment als Mess-Kreissegment gesetzt wird. Das Randintervall wird so gewählt, dass außerhalb des Randintervalls gemessene Kantenwinkel sicher erkannt werden. In anderen Worten wird nur dann ein neues Mess-Kreissegment gewählt, wenn ansonsten mit einem Fehler bei der Ermittlung des Kantenwinkels gerechnet werden muss.

Im Rahmen des erfindungsgemäßen Verfahrens umfasst das Ermitteln der Absolut-Sensorposition die Schritte eines Ermitteln einer Absolut-Sensorkopfposition mittels einer ortsfesten Erfassungsvorrichtung und eines Ermitteln der Absolut-Sensorposition aus der Relativ-Sensorposition und der Absolut-Sensorkopfposition. Beispielsweise kann der Sensorkopf Teil eines Roboters sein. Dann bewegt sich der Roboter entlang der Kante und erfasst beständig die Relativ-Sensorposition, an der der Sensor die Kante passiert. Gleichzeitig erfasst die ortsfeste Erfassungsvorrichtung beständig die absolute Position des Roboters, beispielsweise relativ zu einem Maschinen-Koordinatensystem. Durch Vektoraddition der Positionsdaten wird dann die absolute Position der Kante ermittelt.

Der Roboter ist vorzugsweise ein mobiler autonomer Roboter, der sich frei im Raum bewegen kann. Die Absolut-Sensorkopfposition wird bevorzugt dadurch erfasst, dass eine Erkennungsstruktur auf dem Roboter angeordnet ist. Diese Erkennungsstruktur wird von der Erfassungsvorrichtung erfasst und daraus die Absolut-Sensorposition ermittelt wird.

Beispielsweise ist die Erfassungsvorrichtung eine ortsfeste Kamera, die ausgebildet ist, um dem Roboter nachgeführt zu werden. Im Bild der Kamera wird die Erkennungsstruktur per Bilderkennung erkannt und so die Absolut-Sensorkopfposition errechnet. Dazu besitzt die Erkennungsstruktur beispielsweise eine oder mehrere Lichtquellen oder Orientierungsmarkierungen, die ausgebildet sind, um die Lage und die Position des Roboters zu ermitteln. Es ist auch möglich, dass die Erfassungsvorrichtung ein Lasersystem ist, das mindestens einen Laserstrahl dem Roboter nachführt. Die Position des Roboters wird dann beispielsweise mittels Laser-Triangulation ermittelt.

Im Folgenden werden exemplarische Ausführungsformen der Erfindung anhand der beigefügten Zeichnungen näher erläutert. Dabei zeigt
- Figur 1: eine Draufsicht auf eine erfindungsgemäße Vorrichtung zum Erfassen eines Kantenverlaufs einer Kante einer Glasplatte und
- Figur 2: mit den Teil-Figuren 2a-2c eine schematische Darstellung des Messprinzips des erfindungsgemäßen Verfahrens.
- Figur 3: zeigt schematisch einen Pfad eines Sensorkopfs einer erfindungsgemäßen Vorrichtung beim Abfahren einer Glasplatte.

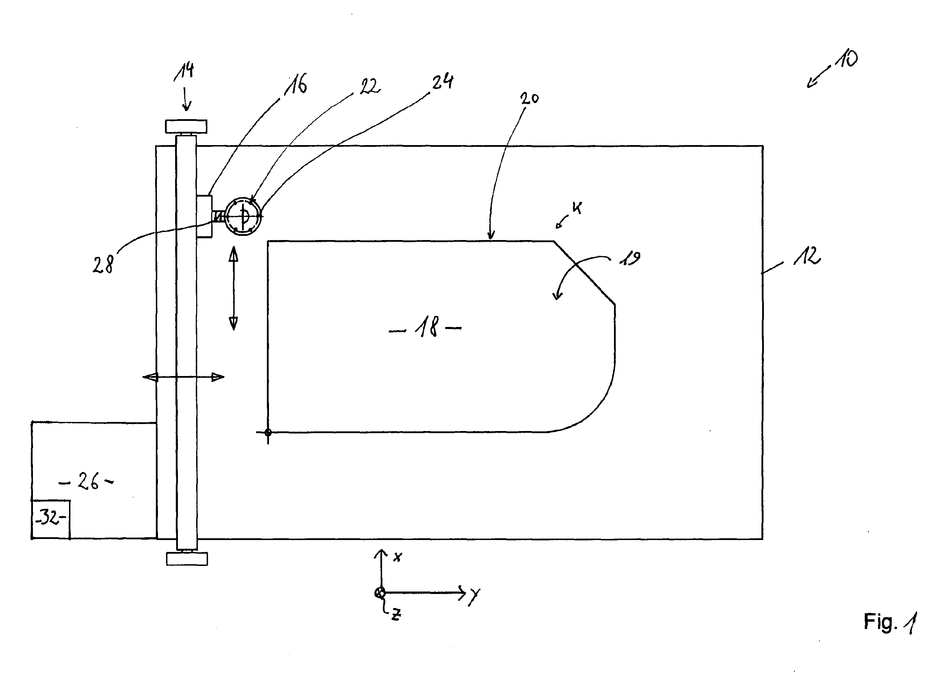

Figur 1 zeigt eine Kantenerfassungsvorrichtung 10, die einen Zuschneidetisch 12 und eine Positioniervorrichtung 14 zum Positionieren eine Sensorkopfs 16 umfasst. Die Positioniervorrichtung 14 ist an dem Zuschneidetisch 12 in eine y-Richtung hin und her bewegbar geführt befestigt. Über einen nicht eingezeichneten Motor kann die Positioniervorrichtung auf eine vorgegebene Stelle entlang der y-Achse präzise positioniert werden.

An der Positioniervorrichtung 14 ist der Sensorkopf 16 in eine x-Richtung hin- und her bewegbar geführt gelagert. Dabei kann die x-Position des Sensorkopfs 16 präzise eingestellt werden. Dazu sind die entsprechenden Antriebsmotoren mit einer elektrischen Steuerung 26 verbunden. Die Steuerung kann als Regelung und/oder als Steuerung im regelungstechnischen Sinn wirken.

Auf dem Zuschneidetisch 12 ist eine Glasplatte 18 angeordnet, die eine Oberfläche 19 und eine Kante 20 besitzt. Die Kante 20 trennt die in Figur 1 sichtbare Oberseite 19 von einer gleich großen, zur Oberseite parallel verschobenen Unterseite. Die Kante 20 steht senkrecht auf der in Figur 1 sichtbaren Oberseite 19. Die Kante 20 kann durch einen Kantenverlauf k(x,y) beschrieben werden, was eine zweidimensionale Funktion der Koordinaten x und y ist.

Zum Durchführen eines beispielhaften erfindungsgemäßen Verfahrens wird eine Sensorscheibe 22 des Sensorkopfs 16 mit einer Drehfrequenz f in eine gleichförmige Drehbewegung versetzt. Dadurch wird ein optischer Sensor 24, der auf der Sensorscheibe 22 angeordnet ist, auf einer geschlossenen umlaufenden Bahn, nämlich einer Kreisbahn, bewegt.

Der optische Sensor 24 ist über eine Funkschnittstelle mit der elektrischen Steuerung 26 verbunden und umfasst zudem einen Lichtsensor zum Aussenden von moduliertem Infrarotlicht. Der optische Sensor 24 ist so eingerichtet, dass er moduliertes Infrarotlicht auf die Glasplatte 18 sendet und eine Lichtintensität I von von der Glasplatte 18 kommendem, reflektiertem Infrarotlicht mit der entsprechenden Modulierung erfasst.

Wie in Figur 1 angedeutet, wird über einen schematisch eingezeichneten Winkelsensor 28 beständig ein Drehwinkel γ erfasst, unter dem die Sensorscheibe 22 gegenüber einer Nulllage verdreht ist. Der Drehwinkel γ kann Werte zwischen 0 und 360° annehmen. Die elektrische Steuerung 26 ermittelt aus den kontinuierlich erfassten Messdaten der vom optischen Sensor 24 erfassten Lichtintensität I einerseits und dem zugehörigen Drehwinkel γ andererseits einen Wendepunkt der Kurve I(γ), so dass ein Kantenwinkel γ_{K} erhalten wird. Anhand des so ermittelten Kantenwinkels γ_{K} steuert die elektrische Steuerung 26 die Antriebe für die Positioniervorrichtung 14 und den Sensorkopf 16 wie im Folgenden beschrieben an.

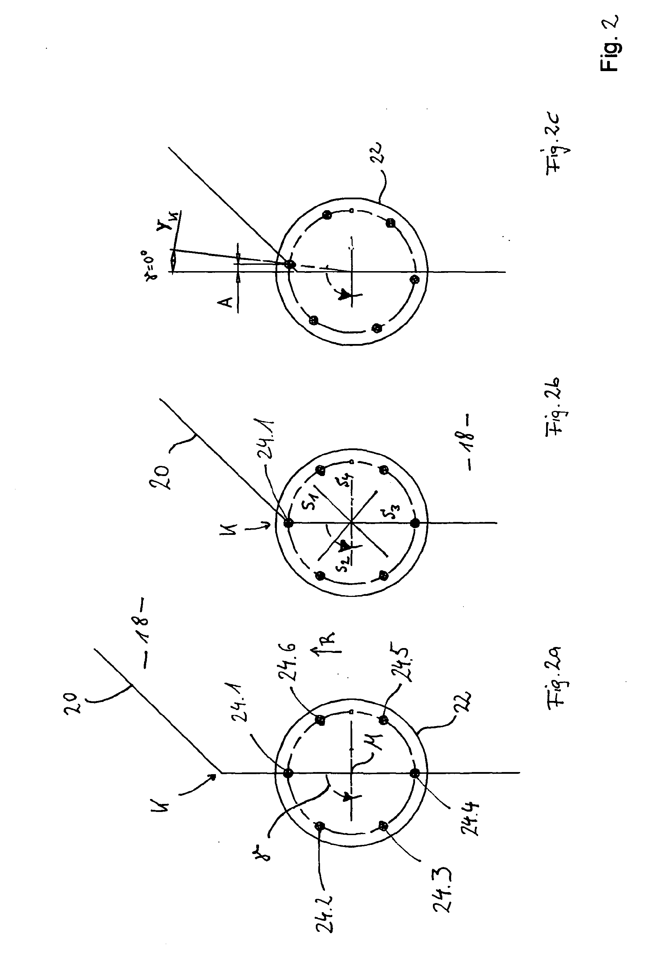

Figur 2a zeigt schematisch die Sensorscheibe 22 mit einer Vielzahl an optischen Sensoren 24, nämlich den Sensoren 24.1, ..., 24.6. Die optischen Sensoren 24 stehen alle über eine Funkverbindung in Verbindung mit der elektrischen Steuerung 26 (vgl. Figur 1). Passiert der Sensor 24.1 die Kante 20 der Glasplatte 18, so fällt die von ihm gemessene Lichtintensität I signifikant ab und die elektrische Steuerung 26 ermittelt daraus den Kantenwinkel γ_{K} = 0.

Anhand des Kantenwinkels γ_{K} = 0 wird der Sensorkopf so bewegt, dass sich ein Kreismittelpunkt M der Sensorscheibe 22 in eine Richtung R bewegt, die ebenfalls unter einem Winkel von γ = 0° liegt. Auf diese Weise wird die Sensorscheibe 22 der Kante so lange nachgeführt, bis sie einen Knickpunkt K der Kante 20 erreicht. In dem Knickpunkt K hat der Kantenverlauf k(x,y) eine Unstetigkeitsstelle und ändert seine Richtung.

Figur 2b zeigt den Zustand, an dem der optische Sensor 24.1 gerade den Knickpunkt K der Kante 20 erreicht hat. Wird die Sensorscheibe 22 um ein Inkrement in Richtung R fortbewegt, so wird von der elektrischen Steuerung 26 (vgl. Figur 1) der Kantenwinkel γ_{K} nicht mehr zu γ_{K} =0° ermittelt, sondern beispielsweise zu γ_{K} =355°, was γ_{K} = -5° entspricht. Diese Situation ist in Figur 2c gezeigt. Die elektrische Steuerung 26 (vgl. Figur 1) bewegt den Sensorkopf nun so, dass die Sensorscheibe 22 bei ihrer nächsten Umdrehung wieder den Soll-Kantenwinkel γ_{Soll} erreicht, so dass dann wieder γ_{K} = γ_{Soll} gilt, im vorliegenden Fall also γ_{K} = 0°.

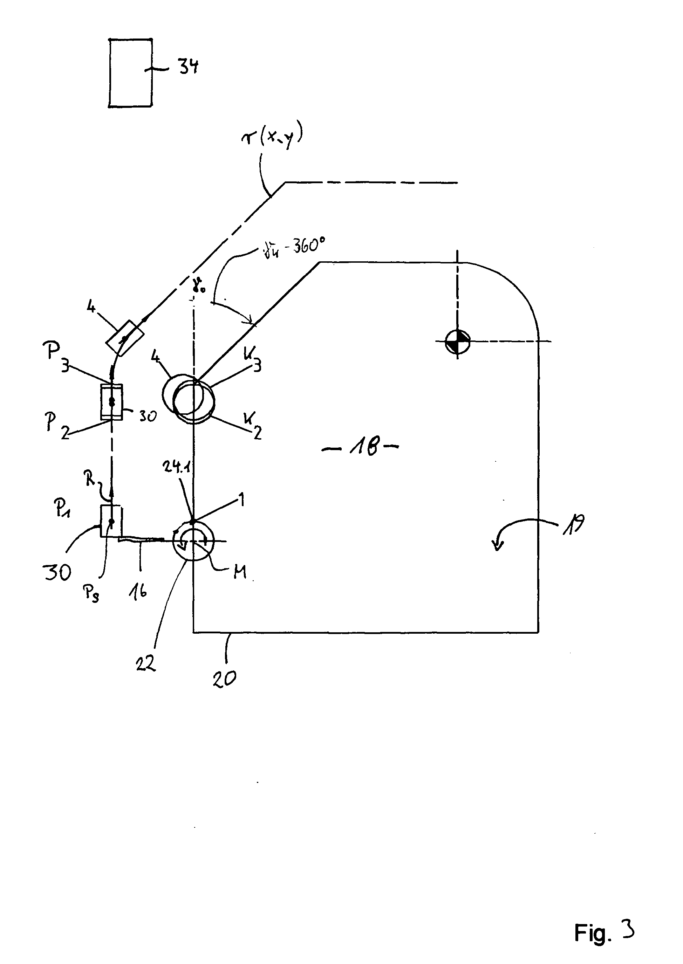

Figur 3 zeigt einen Roboter 30, der über einen entsprechenden Antrieb frei in der Fläche positionierbar ist. Der Roboter 30 ist mit dem oben beschriebenen Sensorkopf 16 wie schematisch eingezeichnet verbunden. Die Glasplatte 18 kann beispielsweise auf dem Boden aufgeständert liegen.

An einer ersten Position P₁ wird ein erfindungsgemäßes Verfahren dadurch begonnen, dass die Sensorscheibe 22 über der Kante 20 so positioniert wird, dass der ermittelte Kantenwinkel γ_{K} dem Soll-Kantenwinkel γ_{Soll} entspricht, im vorliegenden Fall γ = 0°, so dass die Relativ-Sensorposition des Sensors 24.1 relativ zum Roboter 30 bekannt ist. Gleichzeitig wird die Position des Roboters 30 relativ zu der Glasplatte 18 bestimmt oder der Startpunkt P₁ wird als Nullpunkt eines entsprechenden Maschinen-Koordinatensystems gewählt.

Nachfolgend setzt sich der Roboter 30 in die Richtung R in Bewegung, die der Verbindungslinie zwischen dem Kreismittelpunkt M und der Stelle entspricht, an der die Kante 20 detektiert wird. An einer Position P₂ ist die in Figur 2b gezeigte Position erreicht.

In einer Position P₃, zu der der mit K₃ gezeigte Kreis gehört, der die Sensorscheibe 22 symbolisieren soll, weicht der ermittelte Kantenwinkel γ_{K} vom Soll-Kantenwinkel γ_{Soll} ab. In Figur 3 ist der Übersichtlichkeit halber statt des Kantenwinkels γ_{K} der Winkel γ_{K} - 360° eingezeichnet. Der Roboter 30 wird nun so bewegt, dass, wie oben beschrieben, der Kantenwinkel γ_{K} dem Soll-Kantenwinkel γ_{Soll} entspricht. Gemäß einer in Figur 3 gezeigten alternativen Ausführungsform kann der Roboter 30 auch so nachgeführt werden, dass sich ein vom Soll-Kantenwinkel γ_{Soll} abweichender Kantenwinkel γ_{K} einstellt, wobei der Roboter 30 so gesteuert wird, dass sich der Kantenwinkel γ_{K} nicht zu weit vom Soll-Kantenwinkel γ_{Soll} entfernt.

Durch das Nachführen des Roboters 30 bewegt sich der Roboter 30 auf einem Pfad r(x,y). Dabei wird die Position des Roboters 30 auf seinem Pfad kontinuierlich gemessen. Zu jedem Zeitpunkt t ergibt sich ein Punkt des Kantenverlaufs k(x,y) als Vektorsumme aus der Position des Kreismittelpunkts M, der sich aus der Position des Roboters 30 berechnen lässt, und dem Vektor, der vom Kreismittelpunkt M zum optischen Sensor 24 verläuft. Das Verfahren ist beendet, wenn der Roboter 30 einmal um die Glasplatte 18 herumgefahren ist.

Der Roboter 30 kann zudem ein Werkzeug umfassen, beispielsweise einen Bearbeitungslaser, eine Säge oder eine Schleifscheibe. Nachdem der Roboter den Kantenverlauf k(x,y) erfasst hat, kommuniziert er mit einer schematisch eingezeichneten Datenbank 32 (vgl. Figur 1), die in der elektrischen Steuerung 26 abgelegt ist und die bekannte Kantenverläufe von zu bearbeitenden Glasplatten enthält. Durch einen Vergleich mit diesen abgelegten Kurvenverläufen wird bestimmt, um welche in der Datenbank gespeicherte Glasplatte es sich handelt. Danach wird aus der Datenbank ein Kantenverlauf k_{Soll}(x,y)ausgelesen, den die Glasplatte 18 nach einer Bearbeitung haben soll. Daraufhin fährt der Roboter 30 erneut um die Glasplatte 18 herum und trennt die Glasplatte 18 an den entsprechenden Stellen ab.

Es ist möglich, dass die Sensorscheibe 22 Sensoren unterschiedlicher Art enthält, beispielsweise Infrarotsensoren und Lichtsensoren für den optischen Bereich. Auf diese Weise wird der Kantenwinkel γ_{K} mit mehreren unterschiedlichen Sensoren erfasst. Fällt lediglich einer der Sensoren mit seinem Messergebnis aus der Reihe, so kann dieses Messergebnis verworfen werden. So wird erreicht, dass der Kantenverlauf der Platte stets mit einer hohen Prozesssicherheit erfasst werden kann.

Um sicherzustellen, dass stets ein auswertbares Lichtintensitätssignal erhalten wird, wird, wie in Figur 2b gezeigt, ein Kreissegment S₁ als Mess-Kreissegment festgelegt. Wenn die Sensorscheibe 22 dann über einen Knickpunkt K fährt, indem die Kante 20 der Glasplatte 18 einen rechten Winkel hat, hat die Lichtintensitätskurve I(_{Y}) entweder zwei Wendepunkte oder keinen. In diesem Fall wird beispielsweise das Kreissegment S₂ als Mess-Kreissegment festgelegt und der Sensorkopf 16 wird anhand der bekannten letzten Position des Kantenverlaufs k(x,y) so positioniert, dass der Kantenwinkel γ_{K} in S₂ liegt.

Figur 3 zeigt zudem schematisch eine ortsfeste Erfassungsvorrichtung 34 der Kantenerfassungsvorrichtung 10 in Form einer Kamera, die den mobilen autonomen Roboter 30 erfasst. Der Roboter 30 trägt eine der Kamera 34 zugewandte Erkennungsstruktur, beispielsweise ein Gittermuster und/oder eine, zwei, drei oder mehr Lichtquellen, insbesondere Fotodioden. Per Bilderkennung wird die Lage der Erkennungsstruktur im Raum erfasst und daraus die Position des Roboters 30 ermittelt. Die Absolut-Sensorkopfposition P_{S} wird aus der Orientierung des Roboters 30 relativ zur Erkennungsstruktur berechnet.

Die Absolut-Sensorposition ergibt sich aus der so ermittelten Position des Roboters 30 und der Relativ-Sensorposition des Sensors 24 relativ zur Erkennungsstruktur. Die Kamera 34 wird dem Roboter 34 so nachgeführt, dass sie diesen stets zentral in ihrem Gesichtsfeld hat. Zur Positionsermittlung verfügt die Kamera 34 über Winkelsensoren, die ihre Ausrichtung im Raum erfassen.

### Bezugszeichenliste

- 10: Kantenerfassungsvorrichtung
- 12: Zuschneidetisch
- 14: Positioniervorrichtung
- 16: Sensorkopf
- 18: Glasplatte
- 19: Oberfläche
- 20: Kante
- 22: Sensorscheibe
- 24: optischer Sensor
- 26: elektrische Steuerung
- 28: Winkelsensor
- 30: Roboter
- 32: Datenbank
- 34: Erfassungsvorrichtung
- k(x,y): Kantenverlauf
- f: Drehfrequenz
- γ: Drehwinkel
- I: Lichtintensität
- γ_{K}: Kantenwinkel
- M: Kreismittelpunkt
- R: Richtung
- K: Knickpunkt
- γ_{Soll}: Soll-Kantenwinkel
- P: Position
- r(x,y): Pfad des Roboters
- E: Arbeitsebene
- S: Kreissegmente

## Patentansprüche

1. Verfahren zum Erfassen eines Kantenverlaufs (k(x,y)) einer Kante (20) einer Platte (18), insbesondere einer Glasplatte (18), mit den Schritten:
(a) Bewegen eines Sensors (24), insbesondere eines optischen Sensors (24), eines Sensorkopfs (16) auf einer geschlossenen umlaufenden Bahn relativ zum Sensorkopf (16),
(b) Bewegen des Sensorkopfs (16) entlang einer Oberfläche (19) der Platte (18),
(c) kontinuierliches Erfassen von Messsignalen des Sensors (24),
(d) Ermitteln einer Sensorposition des Sensors (24), an der der Sensor (24) die Kante (20) passiert, und
(e) Ermitteln einer Absolut-Sensorposition (x, y) des Sensors (24) relativ zur Platte (18) aus der Sensorposition, so dass der Kantenverlauf (k(x,y)) erhalten wird.

2. Verfahren nach Anspruch 1, **dadurch gekennzeichnet, dass**
- Schritt (d) den Schritt Ermitteln einer Relativ-Sensorposition (γ) des Sensors (24) relativ zum Sensorkopf (16), an der der Sensor (24) die Kante (20) passiert, und
- Schritt (e) den Schritt Ermitteln einer Absolut-Sensorposition (x, y) des Sensors (24) relativ zur Platte (18) aus der Relativ-Sensorposition (γ), so dass der Kantenverlauf (k(x,y)) erhalten wird, umfasst

3. erfahren nach Anspruch 1 oder 2, **gekennzeichnet durch** die Schritte:
(f) Vergleichen des ermittelten Kantenverlaufs (k(x, y)) der Platte (18) mit in einer Datenbank (32) abgelegten Kantenverläufen einer Vielzahl von Platten,
(g) Auslesen einer Bearbeitungsinformation der Platte (18),
(h) Übermitteln der Bearbeitungsinformation an eine Werkzeugmaschine (30) und
(i) Bearbeiten der Platte (18) mittels der Werkzeugmaschine (30) anhand der übermittelten Bearbeitungsinformationen.

4. Verfahren nach einem der vorstehenden Ansprüche, **dadurch gekennzeichnet, dass** Schritt (b) ein Bewegen des Sensorkopfs (16) in einer Arbeitsebene (E) umfasst, die im Wesentlichen parallel zur Oberfläche (19) der Glasplatte (18) verläuft.

5. Verfahren nach Anspruch 4, **dadurch gekennzeichnet, dass** Schritt (b) ein Bewegen des Sensorkopfs (16) in der Arbeitsebene (E) entlang der Kante (20) umfasst.

6. Verfahren nach Anspruch 5, **dadurch gekennzeichnet, dass** Schritt (b) ein Bewegen des Sensorkopfs (16) so, dass die Relativ-Sensorposition (γ) konstant bleibt, umfasst.

7. Verfahren nach einem der vorstehenden Ansprüche, **dadurch gekennzeichnet, dass**
- die geschlossene umlaufende Bahn eine Kreisbahn ist und
- die Relativ-Sensorposition eine Winkelposition (γ) ist, die mittels eines Winkelsensors (28) ermittelt wird.

8. Verfahren nach Anspruch 7, **gekennzeichnet durch** die Schritte
- Setzen eines Kreissegments (S₁) der Kreisbahn als Mess-Kreissegment,
- so dass in Schritt (d) nur die Relativ-Sensorpositionen (γ) ermittelt werden, die in dem vorgegebenen Kreissegment (S₁) liegen.

9. Verfahren nach Anspruch 8, **gekennzeichnet durch** die Schritte:
- Ermitteln, ob die Relativ-Sensorposition (γ) in einem Randintervall des vorgegebenen Kreissegments (S₁) liegt,
- bejahendenfalls Bewegen des Sensorkopfs (16) so, dass die Relativ-Sensorposition (γ) in einem anderen Kreissegment liegt, und
- Setzen des anderen Kreissegments als Mess-Kreissegment.

10. Verfahren nach einem der vorstehenden Ansprüche, **dadurch gekennzeichnet, dass** Schritt (d) die folgenden Schritte umfasst:
- Messen einer Lichtintensität (I) mit dem Sensor (24) in Abhängigkeit von der Winkelposition (γ), so dass eine Lichtintensitätskurve (I(γ)) erhalten wird,
- Ermitteln eines Wendepunkts der Lichtintensitätskurve (I(γ)) und
- Setzen der Winkelposition des Wendepunkts als Relativ-Sensorposition (γ).

11. Verfahren nach einem der vorstehenden Ansprüche, **dadurch gekennzeichnet, dass** das Ermitteln der Absolut-Sensorposition (x,y) die Schritte
- Ermitteln einer Absolut-Sensorkopfposition (P_{S}) mittels einer ortsfesten Erfassungsvorrichtung (34) und
- Ermitteln der Absolut-Sensorposition (x,y) aus der Relativ-Sensorposition (γ) und der Absolut-Sensorkopfposition(R)
umfasst.

12. Verfahren nach Anspruch 11, **dadurch gekennzeichnet, dass** die Absolut-Sensorkopfposition (P_{S}) **dadurch** erfasst wird, dass eine Erkennungsstruktur, die auf dem Roboter (30) angeordnet ist, insbesondere eine Lichtquelle, von der Erfassungsvorrichtung (34) erfasst und daraus die Absolut-Sensorposition ermittelt wird, wobei der Sensorkopf Teil des Roboters (30) ist.

13. Verfahren nach Anspruch 11, **dadurch gekennzeichnet, dass** die Erfassungsvorrichtung eine ortsfeste Kamera (30) ist und der Roboter (30) ein autonomer Roboter (30) ist.

14. Glasscheibenbearbeitungsverfahren, mit den Schritten:
- Erfassen eines Kantenverlaufs (k(x,y)) einer Platte (18) gemäß einem Verfahren nach einem der vorstehenden Ansprüche,
- aus dem Kantenverlauf (k(x,y)) Ermitteln eines Bearbeitungsplans, der Bearbeitungslinien umfasst und
- anschließend Bearbeiten, insbesondere Schneiden und/oder Schleifen der Platte (18) entlang der Bearbeitungslinien.

15. Glasscheibenbearbeitungsverfahren nach Anspruch 14, **dadurch gekennzeichnet, dass** das Erfassen des Kantenverlaufs (k(x,y)) und/oder das Bearbeiten mit einem Roboter (30), insbesondere mit dem gleichen Roboter (30), durchgeführt wird.

16. Vorrichtung zum Erfassen eines Kantenverlaufs einer Kante (20) einer Platte (18), mit:
(a) einem Sensorkopf, der einen relativ zum Sensorkopf (16) auf einer geschlossenen Bahn bewegbaren Sensor (24), insbesondere einen optischen Sensor (24), umfasst,
(b) einer Verfahreinheit zum Bewegen des Sensorkopfs (16) entlang einer Oberfläche der Platte (18) und
(c) einer elektrischen Steuerung (26), die eingerichtet ist zum kontinuierlichen Erfassen von Messsignalen des Sensors (24) und zum Durchführen eines Verfahrens nach einem der vorstehenden Ansprüche.

17. Vorrichtung nach Anspruch 16, **dadurch gekennzeichnet, dass** der Sensor (24) einen Infrarotsensor umfasst.

18. Vorrichtung nach Anspruch 16 oder 17, **dadurch gekennzeichnet, dass** sie einen Roboter, insbesondere einen fahrbaren Roboter (30), umfasst.

19. Vorrichtung nach einem der Ansprüche 16 bis 18, **dadurch gekennzeichnet, dass** die Vorrichtung eine Erfassungsvorrichtung (34) zum Erfassen einer absoluten Position des Roboters (30) umfasst.
